# EUROPÄISCHE PATENTANMELDUNG

(11) **EP 0 959 569 A1**
(43) Veröffentlichungstag der Anmeldung: **24.11.1999**
(21) Anmeldenummer: 99810317.0
(22) Anmeldetag: 16.04.1999
(51) Int. Cl.: H04B 3/56

(54) **Vorrichtung und Verfahren zur Signaleinkopplung in Hoch- und Mittelspannungsleitungen**

(30) Priorität: 11.05.1998 DE 19821045
(71) Anmelder: ABB RESEARCH LTD., 8050 Zürich (CH)
(72) Erfinder: Dzung, Dacfey, Dr., 5430 Wettingen (CH); Rhyner, Jakob, Dr., 8006 Zürich (CH)
(74) Vertreter: Clerc, Natalia

(57) **Zusammenfassung**

Zur Übertragung von PLC-Signalen über eine Hoch- bzw. Mittelspannungsleitung (1) wird eine Einkopplungsvorrichtung (2) vorgesehen, die an zwei beabstandeten Punkten (5a, 5b) mit der Leitung (1) verbunden ist. Die Einkopplungsvorrichtung (2) erzeugt zwischen den beiden Punkten (5a, 5b) ein Spannungssignal, das sich entlang der Leitung (1) ausbreitet. Da die Einkopplungsvorrichtung (2) auf Hoch- bzw. Mittelspannungspotential liegt, ist z.B. ein Mikrowellensender (7) vorgesehen, der das Signal an eine Antenne (6) der Einkopplungsvorrichtung (2) schickt.

## Beschreibung

Die Erfindung betrifft eine Vorrichtung und ein Verfahren zur Signaleinkopplung in Hoch- oder Mittelspannungsleitungen gemäss Oberbegriff der unabhängigen Ansprüche.

Sogenannte Power Line Carrier (PLC) Systeme zur Datenübertragung über Hoch- und Mittelspannungsleitungen sind wohlbekannt. In der Regel wird dabei ein Kommunikationssignal, welches z.B. Steuerdaten oder Sprache enthält, auf einen Träger aufmoduliert, und das modulierte Trägersignal wird in eine oder mehrere der Leitungen eingekoppelt.

Die Einkopplung geschieht in konventionellen Systemen über einen Koppelkondensator, der die Signalquelle und die Leitung galvanisch trennt. Für Mittel- und Hochspannungsleitungen, welche auf einem Potential von z.B. 36 kV bzw. 380 kV liegen, wird eine aufwendige Einkopplungsschaltung beträchtlicher Grösse benötigt.

Es stellt sich deshalb die Aufgabe, ein System der eingangs genannten Art bereitzustellen, bei dem diese Probleme zumindest zum Teil vermieden werden.

Diese Aufgabe wird vom Gegenstand der unabhängigen Ansprüche gelöst.

Indem die Einkopplungsvorrichtung die Signale als Spannungssignale zwischen zwei Punkten entlang der Leitung einkoppelt, ist es im Gegensatz zu bekannten Lösungen nicht mehr nötig, die Signale gegen Erde zu referenzieren. Somit kann die Einkopplungsvorrichtung im wesentlichen auf dem Hoch- bzw. Mittelspannungspotential liegen.

Die Einkopplungsvorrichtung weist vorzugsweise einen Empfänger für Ansteuersignale auf, die in die einzukoppelnden Spannungssignale umgewandelt werden. Die Ansteuersignale können z.B. als Radiosignale, Mikrowellensignale oder optische Signale übermittelt werden. Es ist auch möglich, dass die Einkopplungsvorrichtung die Energie für die Spannungssignale zumindest teilweise aus den Ansteuersignalen bezieht. Es ist jedoch auch denkbar, dass die Einkopplungsvorrichtung Mittel zur Energiegewinnung aus einem Spannungsabfall der Hoch- bzw. Mittelspannungsleitung aufweist.

Vorzugsweise werden die Ansteuersignale als Mikrowellensignale übertragen, in der Einkopplungsvorrichtung mittels passiver Komponenten in die einzukoppelnden Spannungssignale umgewandelt und in die Leitung eingespeist.

Weitere Vorteile und Ausführungen der Erfindung ergeben sich aus den abhängigen Ansprüchen und der nun folgenden Beschreibung anhand der Figuren. Dabei zeigen:
Fig. 1 ein Blockschema einer erfindungsgemässen Einkopplung,
Fig. 2 ein Schaltbild einer möglichen Ausführung der Einkopplungsvorrichtung und
Fig. 3 ein Blockdiagramm einer möglichen alternativen Ausführung der Einkopplungsvorrichtung.

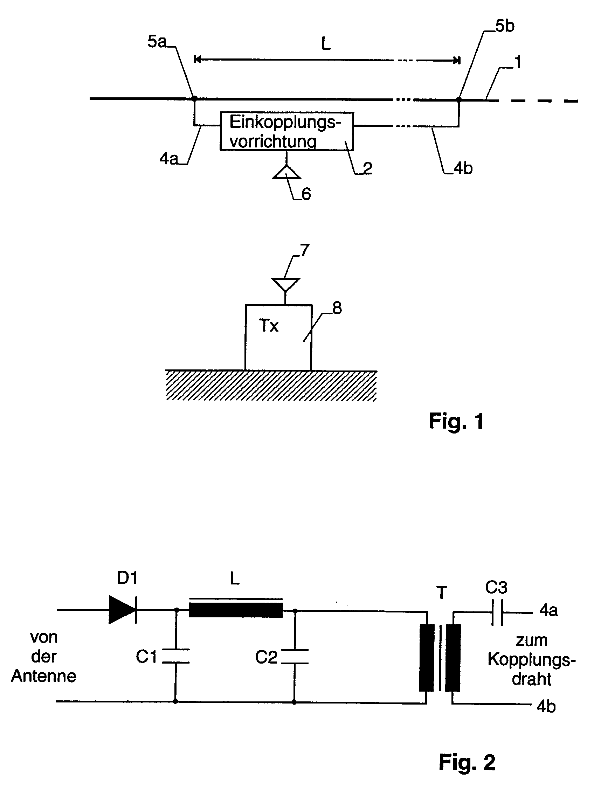

Die Fig. 1 zeigt ein Ende einer Hoch- oder Mittelspannungsleitung 1, an welcher eine Einkopplungsvorrichtung 2 angeordnet ist. Aufgabe der Einkopplungsvorrichtung 2 ist es, PLC Signale mit einer Trägerfrequenz f_{PLC} von z.B. 50 kHz (Mittelspannungsleitungen) oder 300 kHz (Hochspannungsleitungen) in die Leitung 1 einzukoppeln. Diese Signale breiten sich entlang der Leitung 1 aus und werden an einem anderen Ort von einem geeigneten Empfänger (nicht gezeigt) ausgekoppelt.

Die Einkopplungsvorrichtung 2 ist über einen Kopplungsdraht 4a, 4b an zwei Punkten 5a, 5b mit der Leitung 1 elektrisch verbunden. Der Abstand L der Punkte 5a, 5b beträgt dabei mindestens 1/10 der Wellenlänge der Trägerfrequenz f_{PLC}, d.h. mindestens ca. 600 Meter für f_{PLC} = 50 kHz bzw. 100 Meter für f_{PLC} = 300 kHz. Auf diese Weise ist es für die Einkopplungsvorrichtung 2 möglich, zwischen den Punkten 5a, 5b auf der Trägerfrequenz f_{PLC} eine Signalspannung bzw. ein Spannungssignal Uₛ zu erzeugen, das sich als Wellensignal entlang Leitung 1 ausbreiten kann. Vorzugsweise wird der Abstand L nicht grösser als etwa die halbe Wellenlänge der Trägerfrequenz f_{PLC} gewählt, da ein grösserer Abstand in der Regel keine Vorteile bringt.

Die Einkopplungsvorrichtung 2 ist mit einem Detektor bzw. einer Antenne 6 ausgestattet, die Ansteuersignale von einem Sender 7 bzw. einer Signalquelle 8 empfängt. Zur Übertragung der Ansteuersignale können Radiosignale, Mikrowellensignale oder optische Signale verwendet werden.

Fig. 2 zeigt eine Ausführung der Einkopplungsvorrichtung, bei der zur Übertragung Mikrowellensignale mit einer Frequenz f_{S} von z. B. 1 - 10 GHz verwendet werden. Die Verwendung von Mikrowellen hat verschiedene Vorteile. So ist die Gefahr von Interferenzen mit anderen Signalen gering und die Bandbreite hoch. Ausserdem können Mikrowellen gerichtet und mit geringen Verlusten vom Sender 7 an die Antenne 6 übertragen werden. Dies erlaubt es, die Mikrowellenverbindung gleichzeitig zur Energieübertragung zu nutzen, so dass die Einkopplungsvorrichtung über keine eigene Stromquelle verfügen muss.

Zum Betrieb der Ausführung gemäss Fig. 2 wird das Mikrowellensignal der Frequenz f_{S} mit dem zu übertragenden PLC-Signal der Tägerfrequenz f_{PLC} amplitudenmoduliert und als Ansteuersignal vom Sender 7 an die Antenne 6 gesendet. Dort wird das Ansteuersignal in bekannter Weise über die Diode D1 und eine Filteranordnung C1, L und C2 gleichgerichtet und demoduliert, so dass über dem Transformator T eine zum PLC-Signal proportionale Spannung der Trägerfrequenz f_{PLC} liegt. Vom Transformator T wird das Signal über den Kopplungsdraht 4a, 4b an die Punkte 5a, 5b der Leitung 1 angelegt. Ein Kondensator C3 schützt die Einkopplungsvorrichtung vor den hohen Netzströmen (bei 50/60 Hz) der Hoch- bzw. Mittelspannungsleitung.

Die Schaltung nach Fig. 2 ist zur Demodulation von Mikrowellensignalen ausgelegt, die mit einem Modulationsfaktor m < 1 amplitudenmoduliert sind. Für stärker amplitudenmodulierte, phasenmodulierte oder anderweitig modulierte Signale wird eine entsprechend angepasste Schaltung und gegebenenfalls die zusätzliche Übertragung eines unmodulierten Mikrowellensignals benötigt. Da die Schaltung nach Fig. 2 von ihrem Aufbau her sehr einfach ist, wird Amplitudenmodulation mit einem Modulationsfaktor m < 1 jedoch bevorzugt.

In der Ausführung nach Fig. 2 wird die Energie für das einzuspeisende Spannungssignal aus der Energie des Mikrowellensignals abgeleitet, so dass die Einkopplungsvorrichtung keine eigene Stromversorgung benötigt.

Es ist auch denkbar, die Betriebsenergie in anderer Weise der Einkopplungsvorrichtung 2 zuzuführen. So kann z. B. ein separates Mikrowellensignal verwendet werden, welches an die Einkopplungsvorrichtung geschickt, dort gleichgerichtet wird und gegebenenfalls einen Akkumulator speist.

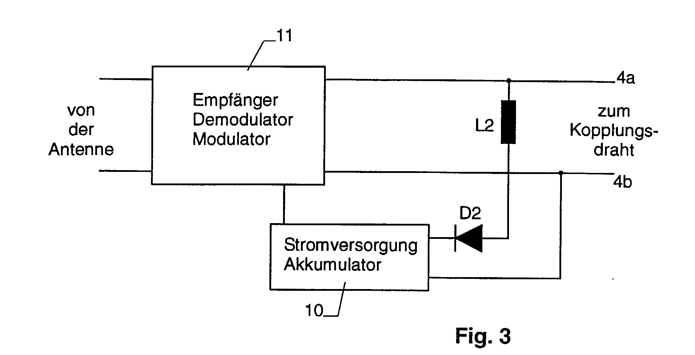

Eine alternative Möglichkeit wird in Fig. 3 gezeigt. Hier wird der Spannungsabfall zwischen den Punkten 5a und 5b genutzt, welcher durch den durch die Leitung 1 fliessenden Strom erzeugt wird.

Im Beispiel nach Fig. 3 wird davon ausgegangen, dass die Leitung 1 Wechselstrom überträgt, d.h. dass der Spannungsabfall eine Frequenz von z.B. 50 Hz aufweist. Um das von der Einkopplungsvorrichtung erzeugte Spannungssignal nicht zu schwächen, wird die Spannung zwischen den beiden Kopplungsdrahtabschnitten 4a, 4b zuerst über einen Tiefpass L2 geleitet, und sodann mit einer Diode D2 gleichgerichtet. Die so erzeugte Spannung kann in einer Stromversorgung mit Akkumulator 10 zwischengespeichert und zum Betrieb der Elektronik 11 der Einkopplungsvorrichtung verwendet werden.

Wird die Elektronik der Einkopplungsvorrichtung mit einer geeigneten Stromversorgung betrieben, so kann sie auch für aufwendigere Signalverarbeitungsaufgaben eingesetzt werden. So ist es denkbar, dass das PLC-Signal in der Einkopplungsvorrichtung z.B. ummoduliert oder mit Fehlerkorrektursignalen versehen wird. Da die Einkopplungsvorrichtung jedoch auf Hochspannungs- bzw. Mittelspannungsniveau liegt, ist eine möglichst einfache Ausgestaltung, wie sie z.B. in Fig. 2 gezeigt wird, bevorzugt, damit ein möglichst wartungsfreier Betrieb möglich ist.

Wie bereits erwähnt, können die Ansteuersignale nicht nur mittels Mikrowellen, sondern auch mittels Radiosignalen (z.B. in Frequenzbereich ab 10 kHz) übermittelt werden. In diesem Fall wird die Einkopplungsvorrichtung mit einem geeigneten Radioempfänger versehen. Die Energie zum Betrieb des Radioempfängers und zur Erzeugung der Spannungssignale zwischen den Punkten 5a und 5b kann in diesem Falle z.B. von einer Schaltung gemäss Fig. 3 oder von einer Batterie geliefert werden.

Die Ansteuersignale können auch als optische Signale übertragen werden, vorzugsweise im Infrarotbereich zwischen 900 und 1300 nm. Die Übertragung kann über die Luft oder mittels optischer Faser geschehen. Auch in diesem Falle muss der Empfänger mit einer geeigneten Stromquelle versehen werden.

## Patentansprüche

1. Hoch- oder Mittelspannungsleitung mit einer Einkopplungsvorrichtung für Kommunikationssignale, dadurch gekennzeichnet, dass die Einkopplungsvorrichtung (2) im wesentlichen auf Hoch- bzw. Mittelspannungspotential liegt, an mindestens zwei beabstandeten Punkten (5a, 5b) mit der Hoch- bzw. Mittelspannungsleitung (1) verbunden ist und ausgestaltet ist zur Erzeugung von Spannungssignalen (Uₛ) zwischen den zwei Punkten (5a, 5b).

2. Hoch- oder Mittelspannungsleitung nach Anspruch 1, dadurch gekennzeichnet, dass der Abstand (L) zwischen den zwei Punkten (5a, 5b) mindestens 1/10 der Wellenlänge einer Trägerfrequenz (f_{PLC}) der Spannungssignale (Uₛ) entspricht.

3. Hoch- oder Mittelspannungsleitung nach einem der vorangehenden Ansprüche, dadurch gekennzeichnet, dass die Einkopplungsvorrichtung (2) einen Empfänger für Ansteuersignale aufweist und Mittel zur Umwandlung der Ansteuersignale in die Spannungssignale (Uₛ).

4. Hoch- oder Mittelspannungsleitung nach Anspruch 3, dadurch gekennzeichnet, dass die Einkopplungsvorrichtung (2) ausgestaltet ist zur Erzeugung der Energie für die Spannungssignale (Uₛ) aus der Energie der Ansteuersignale.

5. Hoch- oder Mittelspannungsleitung nach einem der Ansprüche 3 oder 4, dadurch gekennzeichnet, dass der Empfänger ein Mikrowellenempfänger ist.

6. Hoch- oder Mittelspannungsleitung nach einem der Ansprüche 3 oder 4, dadurch gekennzeichnet, dass der Empfänger ein optischer Empfänger oder ein Radioempfänger ist.

7. Hoch- oder Mittelspannungsleitung nach einem der vorangehenden Ansprüche, dadurch gekennzeichnet, dass die Einkopplungsvorrichtung (2) Mittel (L2, D2, 10) zur Energiegewinnung aus einem Spannungsabfall der Hoch- bzw. Mittelspannungsleitung (1) über den zwei Punkten (5a, 5b) aufweist.

8. Einkopplungsvorrichtung für eine Hochoder Mittelspannungsleitung gemäss einem der vorangehenden Ansprüche.

9. Verfahren zum Einkoppeln von Signalen in eine Hoch- oder Mittelspannungsleitung, dadurch gekennzeichnet, dass über mindestens zwei beabstandeten Punkten (5a, 5b) entlang der Hoch- bzw. Mittelspannungsleitung ein Spannungssignal (Uₛ) angelegt wird.

10. Verfahren nach Anspruch 9, dadurch gekennzeichnet, dass das Spannungssignal (Uₛ) durch Demodulation eines Hochfrequenzsignals erzeugt wird.

11. Verfahren nach Anspruch 10, dadurch gekennzeichnet, dass das Hochfrequenzsignal entsprechend dem Spannungssignal (Uₛ) amplitudenmoduliert wird.

12. Verfahren nach einem der Ansprüche 9 oder 10, dadurch gekennzeichnet, dass drahtlos Ansteuersignale an ein auf Hoch- bzw. Mittelspannung liegende Einkopplungsvorrichtung (2) gesendet werden, wobei die Einkopplungsvorrichtung (2) das Spannungssignal (Uₛ) erzeugt.
